# EUROPEAN PATENT SPECIFICATION

(11) **EP 0 308 229 B1**
(45) Date of publication and mention of the grant of the patent: **08.09.1993**
(21) Application number: 88308553.2
(22) Date of filing: 16.09.1988
(51) Int. Cl.: G01S 7/02

(54) **Sea clutter suppression radar**
Radar mit Seegangsechounterdrückung
Radar de suppression des signaux de brouillage de la mer

(30) Priority: 17.09.1987 JP 232965/87
(43) Date of publication of application: 22.03.1989
(73) Proprietor: Oki Electric Industry Company, Limited, Tokyo 105 (JP)
(72) Inventor: Onozawa, Kazuo c/o Oki Electric Industry Co.,Ltd., Tokyo (JP)
(74) Representative: Read, Matthew Charles

(56) References cited:
- US-A- 3 755 810
- US-A- 3 893 117

## Description

The present invention relates to sea clutter suppression radar.

When a radar senses a target on the sea, the radar may receive not only a true signal reflected from the target but also a false signal reflected from waves on the sea, which degrades the sensing of the target. Various techniques are known for suppressing such a reflected signal from waves on the sea, and a technique to correlate those signals is widely known to be effective. Reference is directed to "Studies Concerning The Improvement Of The Signal-To-Clutter Ration of Radar-Detected Ship Targets" by Specker, 1985, XIth Conference Of International Association Of Lighthouse Authorities.

The correlation method correlates a target signal with a reflected signal from the sea surface by making use of addition and multiplication or a combination thereof, etc., when those signals are varied temporarily or vary due to a change in the characteristics of the associated radar radiowaves. A clutter suppression radar is also known from US-A-3,755,810 which utilises a polarization diversity technique to discriminate between clutter and particular target returns. Horizontally and vertically polarized radiowaves are transmitted and the received returns are processed using first and second detector circuits which detect IF signals of the horizontally and vertically polarized components of the reflected waves, and third and fourth detector circuits which detect IF signals of the vector sum and vector difference of the horizontally and vertically polarized components. The outputs of the various detector circuits are combined and displayed on two display tubes to provide a target display. However, signals reflected from the sea surface change slowly in time compared with the period of a pulse from the radar. When the correlation method utilises correlation between signals shifted in time relative to each other, or correlation between signals with different planes of polarization, or a combination thereof, and unsatisfactory discrimination occurs between signals reflected from the target and reflected clutter from the sea. To solve this, a technique was developed to take the correlation by varying the frequency of radar radiowaves. That is, the technique is adapted to take multiple correlations of four signals: two orthogonal polarized waves and two frequencies, as disclosed in the aforementioned journal reference.

However, such a technique to use a plurality of frequencies suffers from the problem that it may occupy many frequencies in a public waveband, and the associated radar equipment is complicated and costly.

In view of the drawbacks of the prior art, it is an object of the present invention to provide sea clutter suppression radar capable of effectively suppressing a reflected signal from the sea surface, which may use radiowaves of a single frequency.

To achieve the above object, the present invention includes a polarity signal generator for generating a polar signal based upon a subtraction output between an addition output of both outputs from said first and second detectors and a unipolarity conversion output of a subtraction output between said both outputs from the first and second detectors, and a subtraction output between both outputs from said third and fourth detectors; a polarity conversion circuit for converting the polarity of an output derived from said polarity signal generator responsively to a sum of the outputs of said third and fourth detectors; and integrater means for integrating the output of said polarity conversion circuit whereby to provide an output wherein sea clutter tends to be minimized.

Preferably the radar includes a mean level elimination circuit for removing a mean fraction from said sum of the outputs of said third and fourth detectors, for supply to said polarity conversion circuit.

Further, features and advantages of the present invention will become more apparent from the following description when taken in conjunction with the accompanying drawings in which an embodiment of the present invention is shown by way of illustrative example, and wherein:
Figure 1 is a block diagram of an embodiment of sea clutter suppression radar according to the present invention;
Figure 2 is a view illustrating the characteristics of y and z derived from an expression described later wherein (a) shows a relationship between y and ¦r¦, taking the ratio of amplitudes as a parameter, and (b) shows a relationship between z and ¦γ¦ taking the same ratio of amplitudes;
Figure 3 is a block diagram illustrating the arrangement of a polarity signal generator of Figure 1;
Figure 4 is a block diagram illustrating the arrangement of a polarity conversion circuit 39 of Figure 1;
Figure 5 is a view illustrating the output characteristics of the polarity signal generator 38 of Figure 1;
Figure 6 is a view illustrating outputs, etc., from respective portions of the equipment for explaining the output from the radar of Figure 1;
Figure 7 is a block diagram illustrating another embodiment of the present invention;
Figure 8 is a block diagram illustrating yet another embodiment of the present invention;
Figure 9 is a block diagram illustrating the arrangement of the mean level elimination circuit 43 of Figure 1; and
Figure 10 is a truth table listing an output e of an OR circuit 120 with respect to output signals a, b, c and d of comparators 108, 109, 110 and 111 of Figure 3.

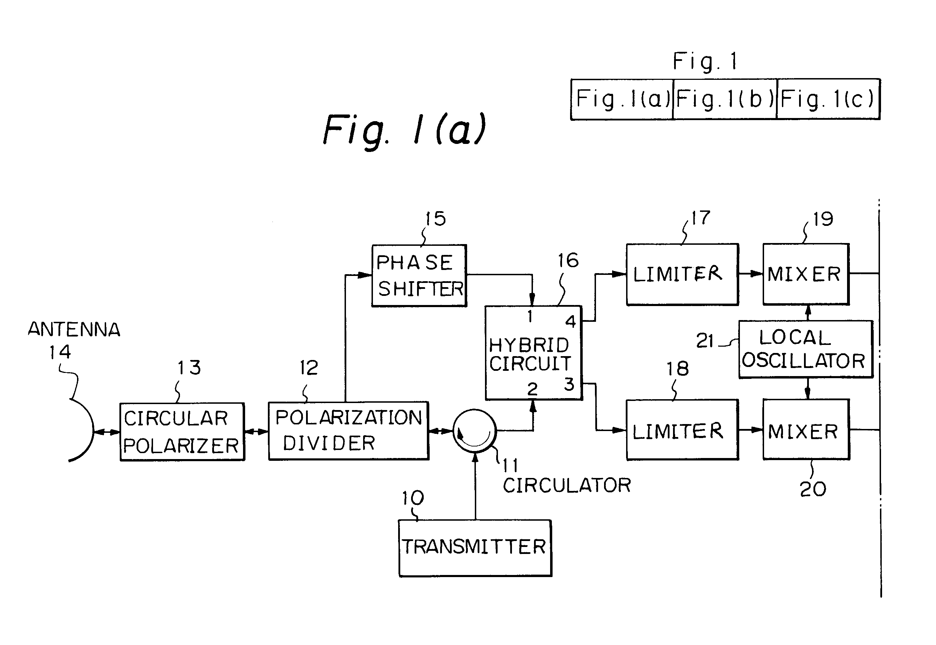

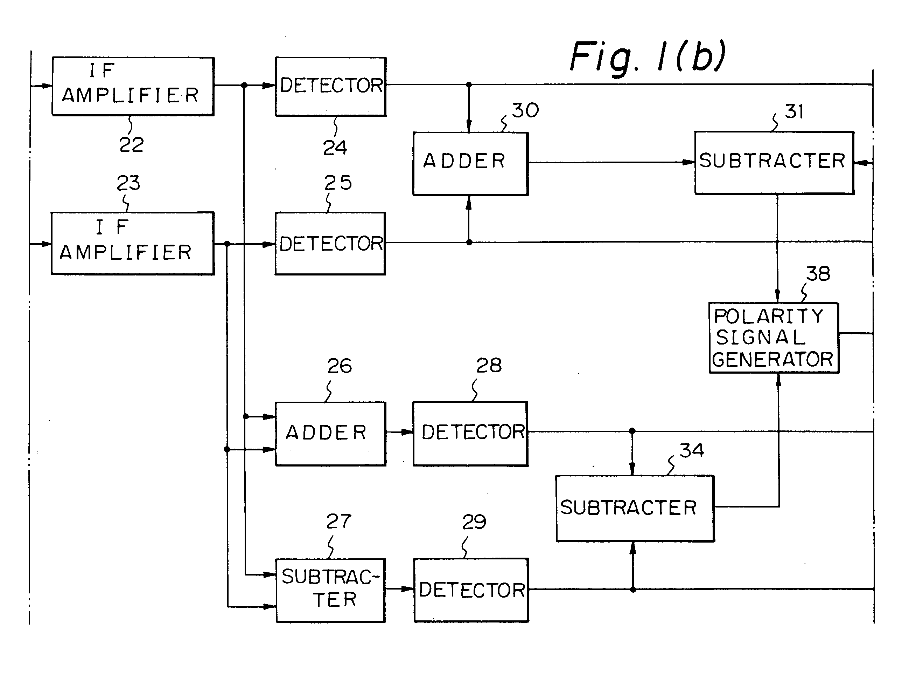

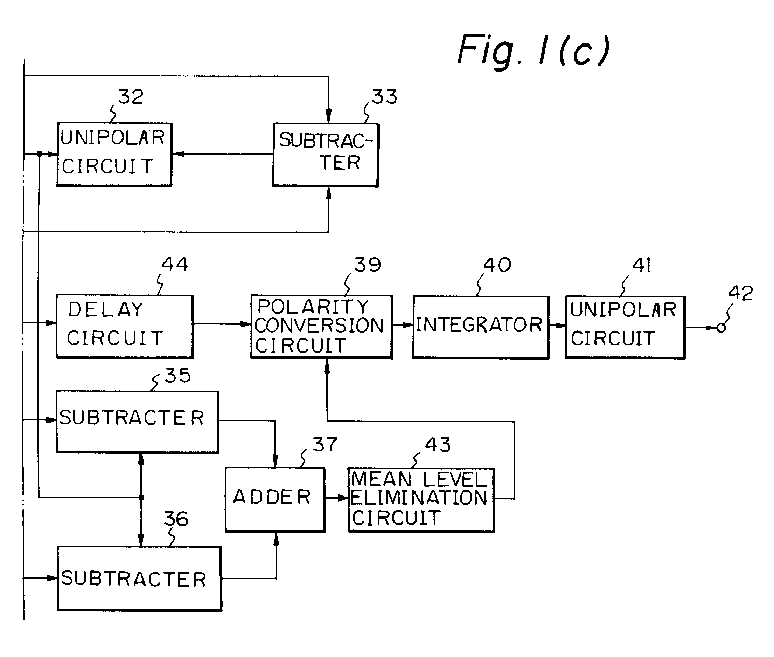

Figure 1 is a block diagram illustrating the arrangement of an embodiment of sea clutter suppression radar according to the present invention. In the figure, designated at 10 is a transmitter for sending pulsed radiowaves of a single frequency, 11 is a circulator for transmitting the pulsed radiowaves in the direction of the arrow illustrated, 12 is a polarization divider, 13 is a circular polarizer for circularly polarized wave of a quarter-wave type including a dielectric plate mounted thereon, which is slated 45° to the left and upwardly when viewed from the direction of porpagation of the sent radiowaves, 14 is an antenna, 15 is a phase shifter, 16 is a hybrid circuit for delivering to terminals 4 and 3 the vector sum of and vector difference between input signals at terminals 1 and 2, 17 and 18 are limiters, 19 and 20 are mixers, 21 is a local oscillator, 22 and 23 are intermediate frequency (IF) amplifiers, 24, 25, 28, and 29 are detectors for effecting envelope detection for IF signals, 26 is an adder for addition of IF signals, 27 is a subtractor for subtraction between the IF signals, 30 and 37 are adders each for addition of video signals, 31, 33, 34, 35, and 36 are subtractors each for subtraction of signals from each other, 32 is a unipolar circuit for converting a bipolar input signal to a unipolar one, 38 is a polarity signal generator for receiving outputs from the subtractors 31 and 34 to generate a binary signal based upon a voltage relationship between both the outputs, 44 is a delay circuit for delaying the binary signal so generated, 43 is a mean level elimination circuit for time-integrating an output signal from the adder 37 through its filter and subtracting the resulting signal from the above output signal to remove the mean fraction of the above output, 39 is a polarity conversion circuit for receiving an output signal from the mean level elimination circuit 43 and the binary signal from the delay circuit 44 to convert the polarity of the former output signal to the original one or a reversed one conformably to the binary singal, 40 is an integrator with the number of addition being n for receiving an output from the polarity conversion circuit 39 to store the same over past n pulse repetition periods thereof and add in succession the same and n signals of the same propagation distance as that of the present signal, 41 is a unipolar circuit for converting a bipolar signal delivered from the integrater 40 to a unipolar one, and 42 is the output terminal for a video signal.

Operation of the embodiment will now be described.

The transmitter 10 generates pulsed radiowaves which are in turn sent, after passing through the circulator 11, to the polarization divider 12 as horizontally polarized radiowaves having a horizontal electric field component. The radiowaves pass through the polarization divider 12 without change, thus sent to the circular polarizer 13 as a horizontally polarized wave, whereby they are converted to a right-handed circularly polarized wave and radiated towards a target through the antenna 14. The reflected wave from a target, elliptically polarized in general, is received by the antenna 14 and sent to the circular polarizer 13. Now expressing the amplitudes and phases of horizontally and vertically polarized components of the received radiowaves as E_{H}, E_{V}, and φ_{H}, φ_{V}, both polarized components undergo a phase change in the circular polariser 13. The polariser 13 produces a phase difference of 90° between electric field components thereof perpendicular and parallel to the dielectric plate disposed in the polarizer 13 after propagation along the length of the dielectic plate. Thereupon, horizontally and vertically polarized components Ḟ_{H} and Ḟ_{V} of the radiowaves output by the polarizer 13 are expressed respectively by: 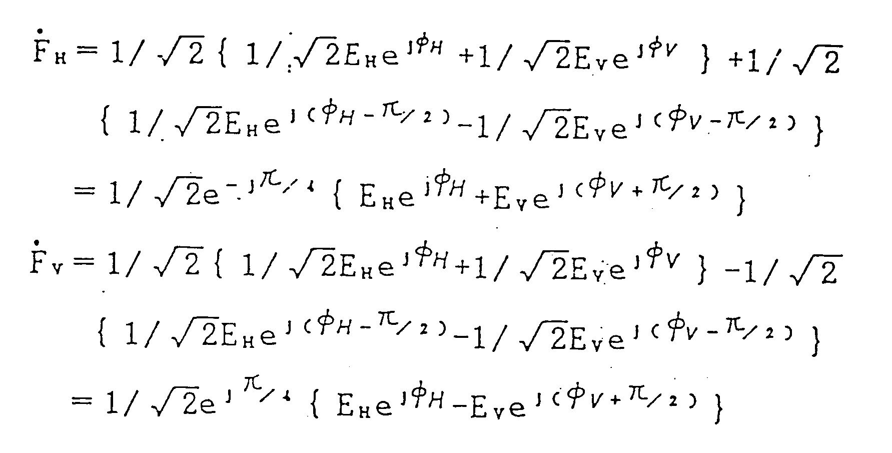
These two polarized components Ḟ_{H} and Ḟ_{V} are then separated by the polarization divider 12, and the horizontally polarized component Ḟ_{H} is transmitted to the same terminal as the input terminal for the received radiowaves while the vertically polarized component F_{V} transmitted to the other terminal. The horizontally polarized wave output Ḟ_{H} from the polarization divider 12 is, after passage through the circulator 11, inputted into the terminal 2 of the hybrid circuit 16, while the vertically polarized wave output F_{V}, after passage through the phase shifter 15 which produces a predetermined phase shift, is fed to the input terminals of the hybrid circuit 16. The predetermined phase shift produced by the phase shifter 15 to the vertically polarized wave makes the propagation phase difference between the horizontally and vertically polarized waves become 90° at the inputs to the hybrid circuit 16. The hybrid circuit 16 produces at terminals 4 and 3 sum and vector difference signals from the input signals to the terminals 1 and 2: 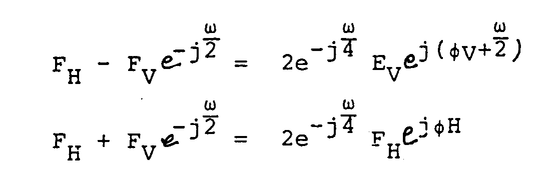
are outputted. These two signals are, after passage through the limiters 17 and 18 respectively, converted to IF signals by the mixers 19 and 20, and, after amplification by the IF amplifiers 22 and 23, outputted as the IF signals. Assuming now that the respective amplitude and phase characteristics of the limiters 17, 18, mixers 19, 20, and IF amplifiers 22, 23 are equal, the outputs from the IF amplifiers 22 and 23 described above are given by signals:

${\text{E₁ = F₁e}}^{\text{jφH}}$ 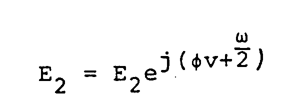
Here, E₁ (>0) and E₂ (>0) respectively express that the amplitudes E_{H} and E_{V} of the horizontally and vertically polarized components of the received radiowaves of these amplitudes E_{H} and E_{V} are changed mainly through the amplitude characteristics of the IF amplifiers 22 and 23. Moreover, common terms of amplitudes and phases to both signals are omitted here. The detectors 24 and 25 output $\text{|} {\text{E}}^{̇} \text{₁|=E₁}$ and $\text{|} {\text{E}}^{̇} \text{₂|=E₂}$ respectively, while the detectors 28 and 29 outputting |Ė₁+Ė₂| and |Ė₁-Ė₂| respectively. Since the output from the unipolar circuit 32 provides |E₁ - E₂|, the amplitude Y of an output from the adder 37 is given by 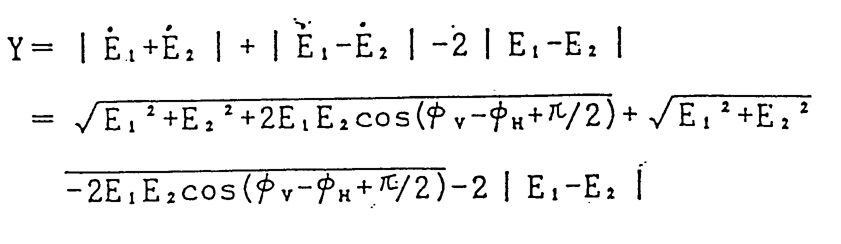
The amplitude Z of an output from the subtracter 34 is given by 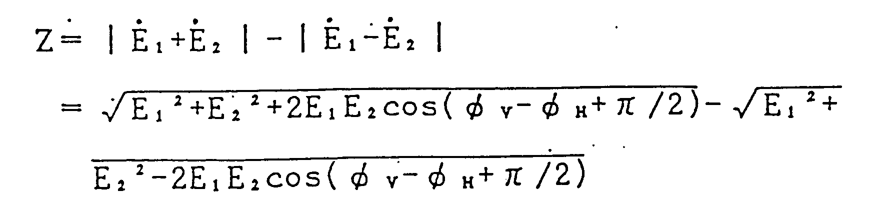
Rewritten here Y and Z with substitution $\text{E₂/E₁ = r}$ , ${\text{φ}}_{\text{V}} {\text{- φ}}_{\text{H}} \text{+ ω/2 = γ}$ , $\text{Y/E₁=y}$ , $\text{Z/E₁=z}$ ,

$\text{y = √} \overline{\text{1+r²+2rcosγ}} \text{+ √} \overline{\text{1+r²-2rcosγ-2}} \text{| 1-r |}$

$\text{z = √} \overline{\text{1+r²+2rcosγ}} \text{- √} \overline{\text{1+r²-2rcosγ}}$

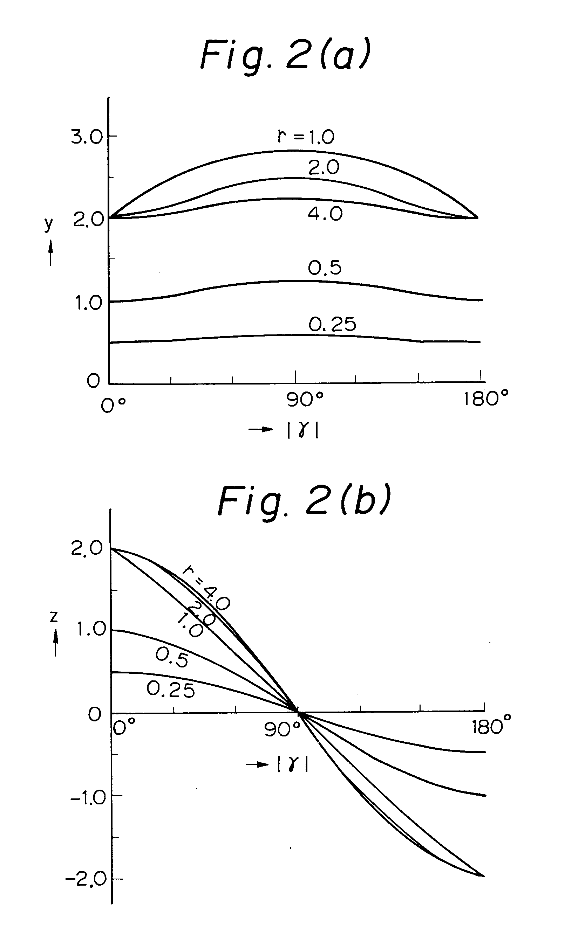

Fig. 2 illustrates the characteristics of y and z, wherein (a) shows a relationship between y and |γ| taking the amplitude ratio r as a parameter, and (b) shows a relationship betwen z and |γ|. As shown in Fig. 2(a), the amplitude Y of the output from the adder 37 has a substantially fixed relation with respect to a phase difference γ associated with the difference between the phases φ_{H} and φ_{V} of the horizontally and vertically polarized components of the received radiowaves as y changes. Additionally, as shown in Fig. 2(b), the amplitude Z of the output from the subtracter 34 monotonously decreases or increases in the range 0 ≦ γ ≦ 180 or -180 ≦ γ ≦ 0 as Z changes. The subtracter 31 outputs $\text{E₁+E₂-|E₁-E₂|}$ therefrom, which is equal to a value Z(γ =0) when γ =0 in the expression of the foregoing amplitude Z. The polarity signal generator 38 compares the value Z( γ =0) with the amplitude Z and thereby generates a binary signal which changes in conformity with the phase difference γ .

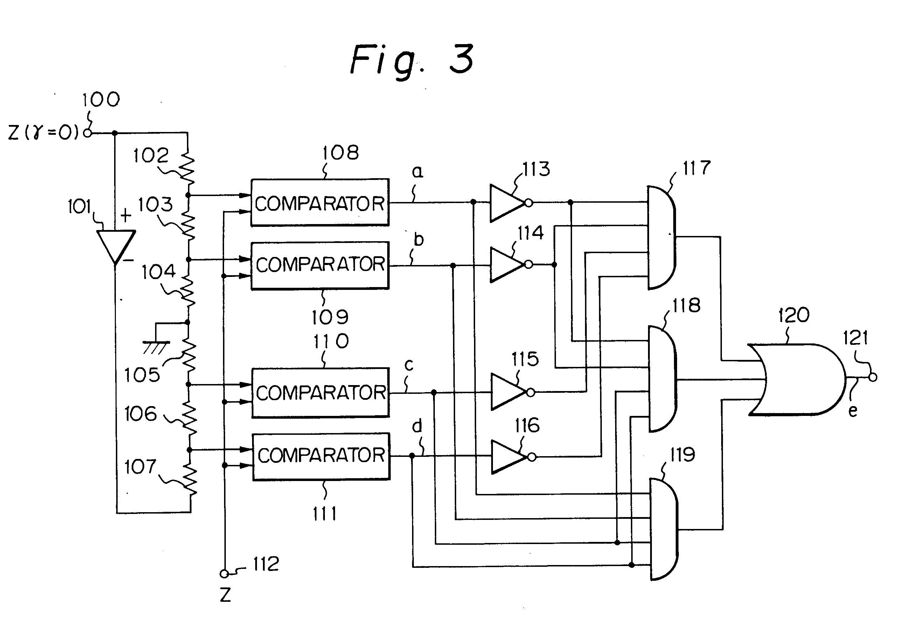

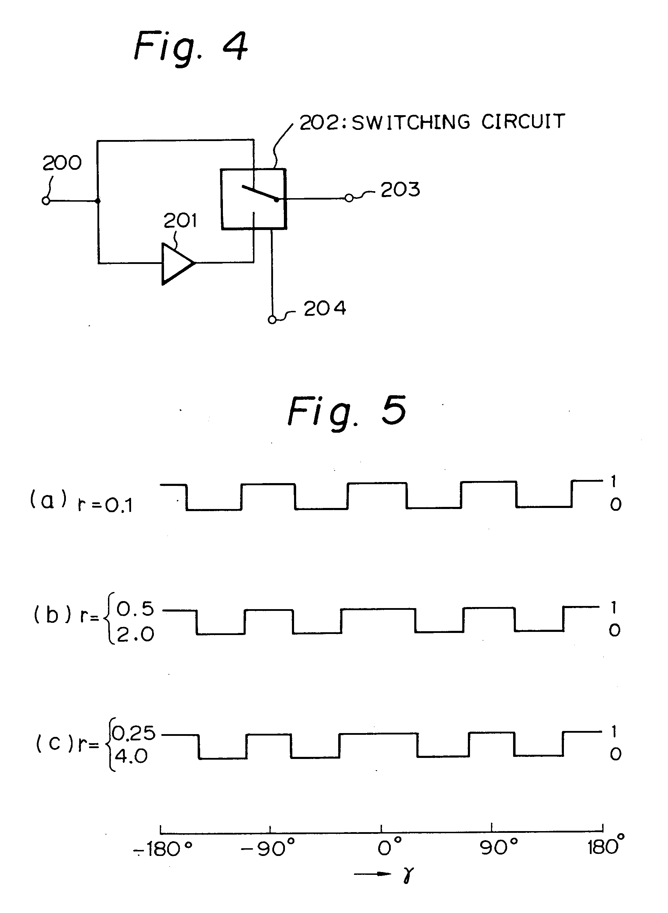

Fig. 3 illustrates the arrangement of the polarity signal generator 38. In the figure, designated at 100 is an input terminal for the output from the subtracter 31, 101 is an inverting amplifier with the gain 1; 102, 103, 104, 105, 106 and 107 are resistors; 108, 109, 110 and 111 are comparators, each outputting 1 when input voltage from the input terminal 112 is higher than voltage across the respective resistors 102 to 107 while outputting 0 in the opposite case; 112 is an input terminal for the output from the subtracter 34; 113, 114, 115 and 116 are NOT circuits; 117, 118 and 119 are AND circuits, 120 is an OR circuit, and 121 is an output terminal. Table 1 is a truth table when the outputs from the comparators 108, 109, 110 and 111 are a, b, c and d, and the output from the OR circuit 120 is e. Assuming here that the amplitude Z of the output from the subtracter 34 inputted to the input terminal 112 changes from a negative low level ( |γ|=180°) to a positive high level (γ=0), each output changes in the order of 1, 2, 3, 4, and 5 listed in Table 1. A relationship between the output e and the phase difference γ is therefore as illustrated in Fig. 5.

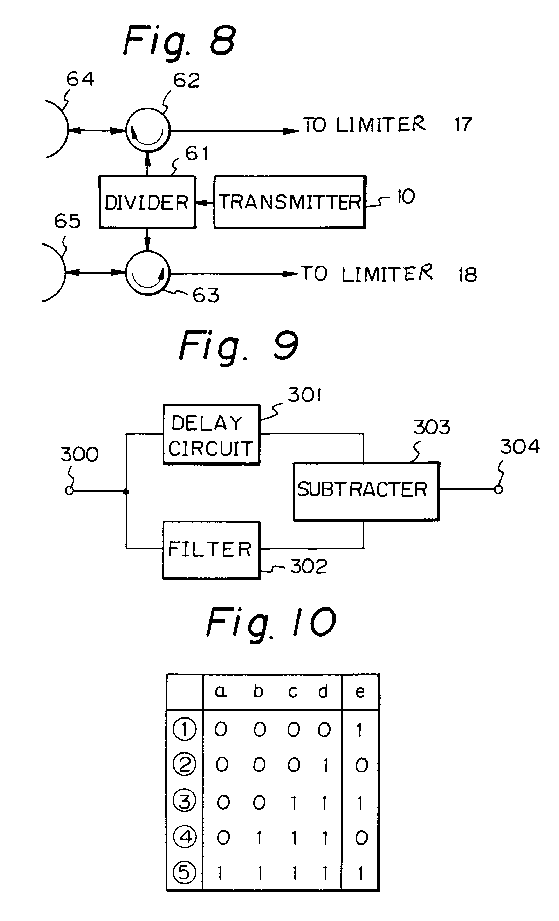

Fig. 5 illustrates a relationship between the output e and the phase difference γ with respect to the different amplitude ratios r estimated by setting the phase retardations of the resistors 102, 103, 104, 105, 106 and 107 to 0.075, 0.269, 0.156, 0.156, 0.269 and 0.075 and referring to the characteristics of Z- |γ| shown in Fig. 2(b). As illustrated in Fig. 5, the output e is reversed at each substantially equal interval between the adjacent phase differences γ .
The mean level elimination circuit 43 is to remove a mean fraction (DC component) included in the reflected signal from the sea surface, the arrangement thereof being as illustrated in Fig. 9. In Fig. 9, designated at 300 is an input terminal for the output from the adder 37; 301 is a delay circuit having the same delay time as that of a filter 302 for eliminating longer, in time, signals than a target signal; 303 is a subtracter for subtracting the output from the filter 302 from the output from the delay circuit 301; and 304 is an output terminal, an output from which is fed to the polarity conversion circuit 39. The delay circuit 44 having the same delay time as that of the mean level elimination circuit 43 serves to time an output from the polarity signal generator 38 with that from the mean level elimination circuit 43.

The polarity conversion circuit 39 is arranged as illustrated in Fig. 4. In the figure, designated at 200 is an output terminal for the output from the mean level elimination circuit 43; 201 is an inverting amplifier of the gain 1; 202 is a switch circuit, which is operated to be connected to the opposite side when a signal at the input terminal 204 is 0, 204 is an input terminal for the output from the delay circuit 44, and 203 is an output terminal.

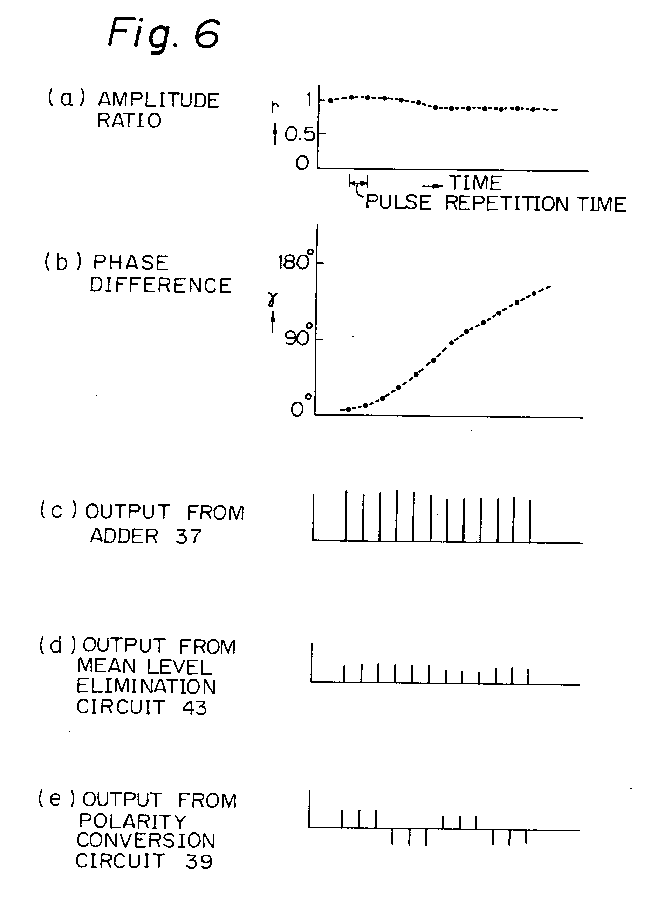

Here, an output from the polarity conversion circuit 39 will be considered to illustrate its effect on the reflected signal from the sea surface, taking as an example a signal reflected from the sea surface when the amplitude ratio r and the phase difference γ both at each pulse repetition period are changed as illustrated as Figs. 6(a) and 6(b). As described previously, the amplitude Y of the output from the adder 37 remains substantially constant with respect to the phase difference γ , and the change in its amplitude at each pulse repetition is reduced compared to the change in amplitude of E1 and E2 as illustrated for example in Fig. 6(c) because of a slow temporal change in the reflected signal from the sea surface. The output from the mean level elimination circuit 43, which is obtained by removing a mean fraction from the above output from the adder 37, is commensurately reduced in amplitude change, as illustrated for example in Fig. 6(d). The polarity of the output may be changed oppositely to that shown in Fig. 6(d) depending upon the magnitude of the mean fraction, but may be often unchanged within a sequence of pulses from the radar because of the slow temporal change of the reflected signal from the sea surface as described above. Since γ ≈ 1 in the present embodiment as evidenced from Fig. 6(a), the output characteristics of the polarity signal generator 38 is as illustrated in Fig. 5(a), and hence the output from the polarity conversion circuit 39 is as illustrated in Fig. 6(e) from the viewpoint of the above output characteristics and the phase difference of Fig. 6(b). That is, the polarity conversion circuit 39 outputs a reverse polarity signal for each small signal group. The bipolar signal is fed to the integrator 40 and added to n signals at each pulse repetition, but when those n signals include bipolar signals, they cancel each other to cause the amplitude of the output from the integrator 40 to be reduced. That is, the signal reflected from the sea surface is suppressed. Although bipolar signals appear at the output of the integrator 40, they are fed to the unipolar circuit 41, by which they are converted to predetermined unipolar signals and delivered to the output terminal.

Assuming that the number of signals of the same polarity in the N₁ th signal group is m (m=3 in Fig. 6(e)) in the output from the polarity conversion circuit 39 for the reflected signal from the sea surface as illustrated in Fig. 6(e), the addition of the n signals in the integrator 40 causes, since the changes in the amplitudes themselves of the signals are small as in the previous description, adjacent small signal groups to cancel each other when n > m. Hereby, only one, at most, small signal group contributes to the output of the integrator 40 to assure the voltage of mV at the highest as the amplitude of the above output. On the other hand, in case of a general target such as a vessel, a reflecting surface for radar radiowaves is structured as a solid. There is accordingly found substantially no relative change in the horizontally and vertically polarized waves of the reflected signal in the order of irradiation time of a radar beam. Thus, the amplitude ratio r and the phase difference γ are made substantially unchanged during the hits of radar pulses, and also the output from the polarity conversion circuit 39 is made substantially constant in its amplitude and polarity. The output amplitude of the integrator 40 is thus n Vs. Here, Vs is the target output amplitude of the polarity conversion circuit 39. As a result, the ratio of the target signal to the signal yielded by removing the mean fraction from the reflected signal from the sea surface, i.e., the ratio of target signal to varying clutter voltage (hereinafter referred to as a ratio S/C) substantially exceeds $\frac{\text{n}}{\text{m}}$ · $\frac{\text{Vs}}{\text{Vc}}$. It is hereby found that the improved ratio S/C by the integration in the video signal region is substantially above n/m proportional to the first power of the number of additions of the signal. That is, in the present invention, the improved ratio S/C is proportional to the first power of the number of additions, so that an increase of the addition number n assures a more effective improvement of the ratio S/C than in the prior method where the number of frequencies used is increased.

Additionally, when the interval between the adjacent phase differences γ , for which the output from the polarity signal generator 38 has the same polarity, is reduced by for example increasing the number of the comparators in the polarity signal generator 38, the aforementioned number m of signals may be reduced so as to further improve the ratio S/C.

Furthermore, as to the amplitude Y of the adder 37, Y≃2E₁ holds from the previous expression when E₁ « E₂, while Y ≃ 2E₂ holds when E₁ » E₂. In other words, for the amplitude Y, the above output from the adder 37 corresponding to one component having smaller amplitude between the horizontally and vertically polarized components of the reflected radiowaves is assured. Reflected radiowaves from the sea surface are frequently different in the amplitudes of both polarized waves thereof from each other so that the amplitude Y is reduced responsively to the amplitude ratio of both polarized waves, while reflected radiowaves from a general target sees no great difference between the amplitudes of both polarized waves so that the amplitude Y is not reduced in particular. Thus, also from the viewpoint of the amplitude Y, the signal to clutter voltage ratio may be improved for the reflected signal from the sea surface.

Here, approximate values of the rate of a change in the phase difference between the horizontally and vertically polarized components of the reflected radiowaves from the sea surface and of the improved ratio S/C will be described in a concrete manner. The power spectral densities of both polarized waves are respectively expressed as follows with use of Gaussian distribution approximation: 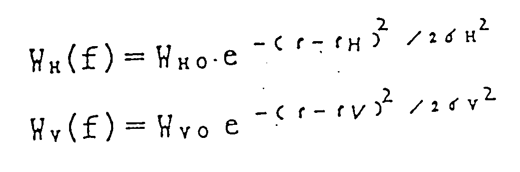
, where f is frequency, W_{H}(f) and W_{V}(f) are power spectral densities of horizontally and vertically polarized radiowaves, W_{HO} and W_{VO} are power spectral densities of the horizontally and vertically polarized radiowaves at the center of the spectrum, f_{H} and f_{V} are center frequencies of the spectrum of the horizontally and vertically polarized radiowaves, and σ_{H} and σ_{V} are spreadings of the spectrum (standard deviation) of the horizontally and vertically polarized radiowaves. The effective value Δfᵣₘₛ of a difference frequency of both polarized radiowaves is, since there is no correlation between the spectrums of both polarized radiowaves, expressed as follows: 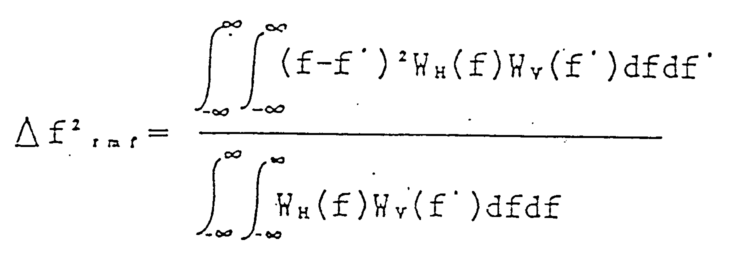
Substitution of this expression into W_{H}(f) and W_{V}(f) provides

Δfᵣₘₛ = √σ̅ _̅{̅H̅}̅ ²̅ +̅ σ̅ ᵥ̅ ²̅ +̅ (̅f̅_̅{̅H̅}̅-̅f̅ᵥ̅)̅²̅

On the assumption that ${\text{f}}_{\text{H}} {\text{=f}}_{\text{V}}$ because f_{H} ≃ f_{V} in case of actual radiowaves reflected from the sea surface, and that σ_{H} and σ_{V}, although sometimes satisfy σ_{H} 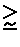 σ_{V}, satisfy ${\text{σ}}_{\text{H}} {\text{= σ}}_{\text{V}} {\text{= σ}}_{\text{C}}$ for brevity,

${\text{Δf}}_{\text{rms}} {\text{= √2 σ}}_{\text{c}}$

holds.
The term σ_{c}, although being different depending upon the wavelength of the radar radiowaves used and the degree of waves, safisfies σ_{c}λ = 100 to 220 cm/sec when wind velocity ranges from 8 to 20 knots ( λ : wavelength of the radar radiowaves) as shown in references (for example, Borton:"Radar System Analysis", P.100, 1976, Artech House Inc.). Assumed accordingly that σ_{c}λ = 160 cm/sec, λ = 2.2 cm (at frequency of 13.8 GHz, an example of habor radars in Japan), 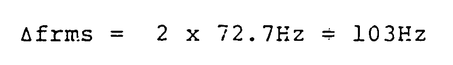
holds.
Assumed further the effective value of a change in a phase difference between both polarized waves during pulse repetitions is to be _{Δγrms},

$\text{Δγrms = 2ω x Δfrms x T}$

holds. Here, T is a period of the pulsed radiowaves. With T=0.33ms,

${\text{}}_{\text{Δγrms}} {\text{= 2ω x 103 x 0.33 x 10⁻³ = 0.214}}_{\text{rad}} \text{= 12.3°.}$

That is, the many change in the phase difference between both polarized radiowaves at each pulse repetition is 12.3°. When the output characteristics of the polarity signal generator 38 are as illustrated in Fig. 5, the mean phase angle with the same polarity is 45°, and hence the mean value of the number m of the foregoing signals is given as m ≈ 45°/12.3° = 3.7. Assuming the number n of additions of the foregoing signals to be 12, the improved ratio S/C by the integrator 40 exceeds about n/m ≈ 12/3.7 = 3.2 (10dB) on the average.

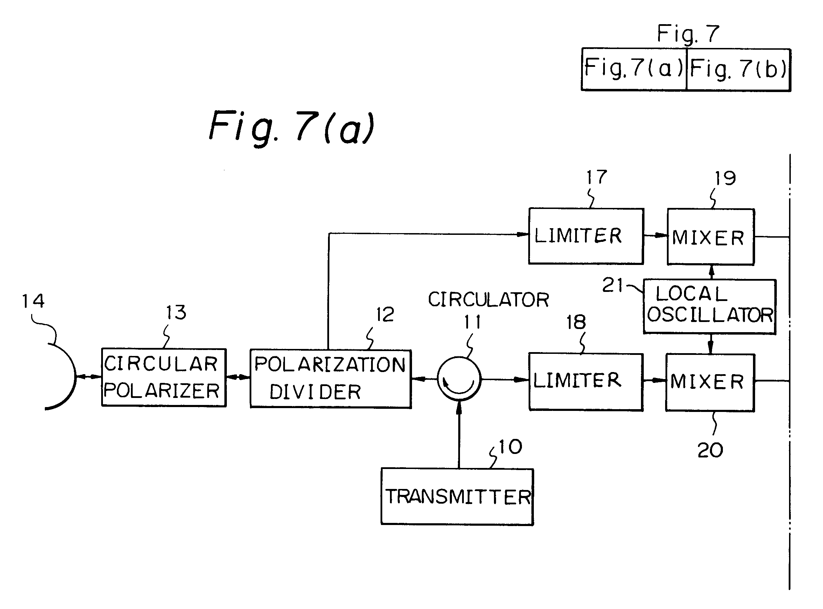

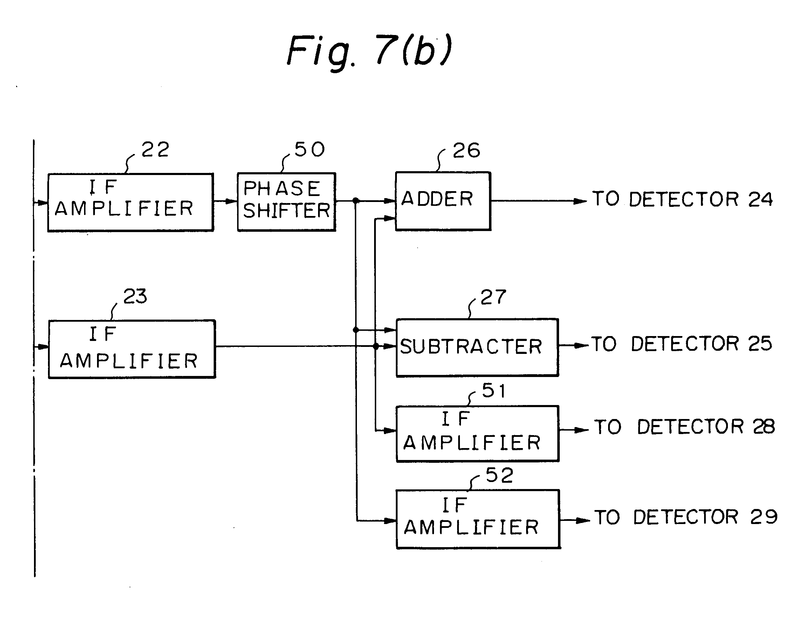

Fig. 7 illustrates another embodiment of the present invention wherein different portions from those shown in Fig. 1 are shown. In the figure, designated at 50 is a 90° phase shifter for the IF signal, and 51 and 52 are IF amplifiers each for amplifying the voltage of the IF signal to double the same. The polarization divider 12 after receiving a signal outputs the two polarized components F_{V} and F_{H} as in the embodiment of Fig. 1. These signals are after passage through limiters 17 and 18, converted to IF signals by mixers 19 and 20, and amplified by IF amplifiers 22 and 23. As a result, the IF amplifier 22 outputs 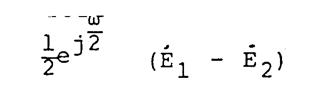
as an IF signal corresponding to 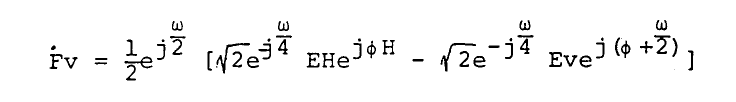
and hence the phase shifter 50 outputs an IF signal ½(Ė₁ - Ė₂). The IF amplifier 23 outputs ½(Ė₁ + Ė₂) as a signal corresponding to 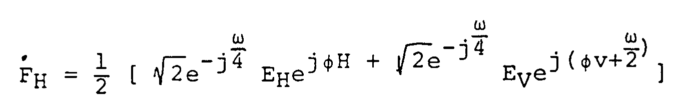
Ė₁ and Ė₂ are here the same as those described before. Thus, Ė₁, Ė₂, Ė₁ + Ė₂, and Ė₁ - Ė₂, appear as IF signals at output terminals of an adder 26, a subtracter 27, an IF amplifier 51, and an IF amplifier 52, respectively. Those IF signals are the same as the IF signals inputted to the detectors 24, 25, 28, and 29 of the embodiment of Fig. 1, and hence the remaining operation of the present embodiment is the same as in the embodiment of Fig. 1.

Fig. 8 illustrates a further embodiment of the present invention wherein different portions from those illustrated in Fig. 1 are shown. In the figure, designated at 61 is a distributor, 62 and 63 are circulators, and 64 and 65 are antennas, one for sending horizontally and vertically polarized radiowaves, the other for receiving the same. Pulsed radiowaves generated by a transmitter 10 of Fig. 8 are divided into two waves by the distributor 61, which are then transmitted to the circulators 62 and 63 and sent through the antennas as horizontally and vertically polarized radiowaves, respectively. A horizontally polarized component between reflected radiowaves from a target is received by the antenna 64 while a vertically polarized one received by the antenna 65, both components being then transmitted to the circulators 62 and 63. Horizontally and vertically polarized components of the received radiowaves transmitted from the circulators 62 and 63 are fed to the limiters 17 and 18. Operation thereafter is the same as in the embodiment of Fig. 1. Assuming here the amplitudes and phases of the horizontally and vertically polarized components of the received radiowaves in the embodiment of Fig. 8 to be expressed by E_{H} and E_{V}, and φ_{H} and φ_{V}, respectively, outputs from the IF amplifiers 22 and 23 are expressed by Ė₁ = E₁e^{jφH} and Ė₂ = E₂ e^{jφV} . With the assumption of the phase difference being expressed by _{γ} = φ _{V} - φ_{H}, the foregoing expressions can accordingly be employed as they are without alteration, with the same effect as in the previous embodiments.

The embodiment of Fig. 1 may be modified such that the subtractors 35 and 36 are removed and the outputs from the detectors 28 and 29 are directly connected to the adder 37. But, the previous feature, in which for the amplitude of the output from the adder 37 that corresponding to one component having a smaller amplitude between both polarized components of the reflected radiowaves is assured differing from the amplitude Y described previously, is thereupon missed.

Additionally, the embodiment of Fig. 1 may be modified such that the mean level elimination circuit 43 and the delay circuit 44 are removed, and the outputs from the adder 37 and polarity signal generator 38 are directly fed to the polarity conversion circuit 39. But, the mean fraction included in the output from the adder 37 thereupon remains as it is, so that the amplitude of the output from the polarity conversion circuit 39 for a reflected signal from the sea surface is slightly increased. The embodiment of Fig. 1 may further be modified such that an A/D converter is inserted after the detectors 24, 25, 28 and 29 of Fig. 1, and outputs from the respective detectors are converted to digital signals to process all operation after that of Fig. 1 in a digital form.

## Claims

1. A clutter suppression radar comprising: antenna means (14; 64,65) for simultaneously transmitting horizontally and vertically polarized radiowaves;
first and second detectors (24,25) for respectively detecting IF signals of the horizontally and vertically polarized components of reflected radiowaves; and
third and fourth detectors (26,27) for respectively detecting IF signals of the vector sum of and the vector difference between said horizontally and vertically polarized components;
characterised by:
a polarity signal generator (38) for generating a polar signal based upon a subtraction output between an addition output of both outputs from said first and second detectors (24,25) and a unipolarity conversion output of a subtraction output between said both outputs from the first and second detectors (24,25), and a subtraction output between both outputs from said third and fourth detectors (26,27);
a polarity conversion circuit (39) for converting the polarity of an output derived from said polarity signal generator (38) responsively to a sum of the outputs of said third and fourth detectors; and
integrator means (40) for integrating the output of said polarity conversion circuit (39) whereby to provide an output wherein sea clutter tends to be minimized.

2. A radar according to claim 1 including a mean level elimination circuit (43) for removing a mean fraction from said sum of the outputs of said third and fourth detectors (26,27) for supply to said polarity conversion circuit (39).

3. A radar according to claim 1 or 2 including an adder (30) for producing said first addition output of both outputs from said first and second detectors (24,25);
a first subtractor (33) for producing said subtraction output between both outputs of said first and second detectors (24,25);
a unipolar circuit (32) responsive to the output of said first subtractor (33) to produce said unipolarity output;
a second subtractor (31) for producing a subtraction output between the output of the adder (30) and the unipolar circuit (32);
a third subtractor (34) for producing said subtraction output between both outputs of said third and fourth detectors (26,27);
wherein said polarity signal generator (38) is responsive to the outputs from said second and third subtractors (31,34) to produce said polar signal.

4. A radar according to claim 3 including a further adder (37) for forming said sum of the outputs of said third and fourth detectors (26,27)

5. A radar according to claim 4 including subtractor means (35,36) for subtracting the output of said unipolar circuit (32) from the outputs of said third and fourth detectors (26,27) prior to summation thereof by the further adder (37).

6. A radar according to any preceding claim wherein said antenna means includes first and second antennas (64,65) for said horizontally and vertically polarized radiowaves respectively.

7. A radar according to claim 2 wherein said mean level elimination circuit (43) includes an input (300), a delay circuit (301) coupled to the input, a filter (302) coupled to the input, and a subtractor for subtracting the output of the filter (302) from the output of the delay circuit (303).

8. A radar according to any preceding claim wherein said polarity conversion circuit (39) includes an input (200) to receive an output derived from said polarity signal generator (38), inventer means (201) for producing an inverted signal, an output (203), and switching means (202) for coupling the signal at the input (200) or said inverted signal from the inventer means (201) to the output (203) in dependence upon the value of said sum of the outputs of said third and fourth detectors (26,27).

9. A radar according to any preceding claim including a unipolar circuit (41) coupled to the output of said integrater (40).

10. A radar according to claim 3 wherein said polarity signal generator (38) includes a potential divider (102-107) to receive the output of said second subtractor (31), a plurality of comparators (108-111) each having a first input coupled to a respective tapping point on the potential divider, and each said comparator having a second input to receive said output of the third subtractor (34), and logic means (113-120) for logically combining the outputs of said comparators to provide a logic level signal as a function of the relative phases of the outputs of said second and third subtractor circuits (31,34).

## Patentansprüche

1. Radar mit Störungsunterdrückung, das aufweist:
eine Antenneneinrichtung (14; 64, 65) zum gleichzeitigen Senden von horizontal und vertikal polarisierten Funkwellen; erste und zweite Detektoren (24, 25) zum jeweiligen Detektieren von ZF-Signalen der horizontal und vertikal polarisierten Anteile der reflektierten Funkwellen; und
dritte und vierte Detektoren (26, 27) zum jeweiligen Detektieren von ZF-Signalen der Vektorsumme der horizontal und vertikal polarisierten Anteile und der Vektordifferenz zwischen diesen;
gekennzeichnet durch:
einen Polaritätssignalgenerator (38) zum Erzeugen eines Doppelstromsignales, das auf einem Subtraktionsausgangssignal zwischen einem Additionsausgangssignal von beiden Ausgängen der ersten und zweiten Detektoren (24, 25) und einem Unipolaritätsumsetzungsausgangssignal eines Subtraktionsausgangssignales zwischen den beiden Ausgangs signalen der ersten und zweiten Detektoren (24, 25) und einem Subtraktionsausgangssignal zwischen beiden Ausgängen der dritten und vierten Detektoren (26, 27) basiert;
eine Polaritätsumwandlungsschaltung (39) zum Umwandeln der Polarität eines vom Polaritätssignalgenerator (38) stammenden Ausgangssignales in eine Summe der Ausgangssignale der dritten und vierten Detektoren; und
eine Integrierereinrichtung (40), um das Ausgangssignal der Polaritätsumwandlungsschaltung (39) zu integrieren, wobei ein Ausgangssignal geliefert wird, bei dem Seestörungen die Tendenz haben, minimiert zu werden.

2. Radar nach Anspruch 1, das eine Mittelpegeleliminationsschaltung (43) enthält, um einen mittleren Bruchteil aus der Summe der Ausgangssignale der dritten und vierten Detektoren (26, 27) zum Anlegen an die Polaritätsumwandlungsschaltung (39) zu entfernen.

3. Radar nach Anspruch 1 oder 2, das enthält
einen Addierer (30), um das erste Additionsausgangssignal der beiden Ausgangssignale der ersten und zweiten Detektoren (24, 25) zu erzeugen;
einen ersten Subtrahierer (33), um das Subtraktionsausgangssignal zwischen beiden Ausgangssignalen der ersten und zweiten Detektoren (24, 25) zu erzeugen;
eine Unipolarschaltung (32), die auf das Ausgangssignal des ersten Subtrahierers (33) zum Erzeugen des Unipolaritätsausgangssignales anspricht;
einen zweiten Subtrahierer (31) zum Erzeugen eines Subtraktionsausgangssignales zwischen dem Ausgangssignal des Addierers (30) und der Unipolarschaltung (32);
einen dritten Subtrahierer (34) zum Erzeugen des Subtraktionsausgangssignales zwischen beiden Ausgangssignalen der dritten und vierten Detektoren (26, 27);
bei welchem der Polaritätssignalgenerator (38) auf die Ausgangssignale der zweiten und dritten Subtrahierer (31, 34) anspricht, um das Doppelstromsignal zu erzeugen.

4. Radar nach Anspruch 3, das einen weiteren Addierer (37) enthält, um die Summe der Ausgangssignale der dritten und vierten Detektoren (26, 27) zu bilden.

5. Radar nach Anspruch 4, das eine Subtraktionseinrichtung (35, 36) enthält, um das Ausgangssignal der Unipolarschaltung (32) von den Ausgangssignalen der dritten und vierten Detektoren (26, 27) vor deren Summation durch den weiteren Addierer (37) zu subtrahieren.

6. Radar nach einem der vorangegangenen Ansprüche, bei dem die Antenneneinrichtung erste und zweite Antennen (64, 65) für die horizontal bzw. vertikal polarisierten Funkwellen enthält.

7. Radar nach Anspruch 2, bei dem die Mittelpegeleliminationsschaltung(43) einen Eingang (300), eine an den Eingang gekoppelte Verzögerungsschaltung (301), ein an den Eingang gekoppeltes Filter (302) und einen Subtrahierer enthält, um das Ausgangssignal des Filters (302) vom Ausgangssignal der Verzögerungsschaltung (303) zu subtrahieren.

8. Radar nach einem der vorangegangenen Ansprüche, bei dem die Polaritätsumwandlungsschaltung (39) einen Eingang (200), um ein vom Polaritätssignalgenerator (38) stammendes Ausgangssignal zu empfangen, eine Invertierereinrichtung (201) zum Erzeugen eines invertierten Signales, einen Ausgang (203) und eine Schalteinrichtung (202) enthält, um das Signal am Eingang (200) oder das invertierte Signal der Invertierereinrichtung (201) in Abhängigkeit des Wertes der Summe der Ausgangssignale der dritten und vierten Detektoren (26, 27) an den Ausgang (203) zu koppeln.

9. Radar nach einem der vorangegangenem Ansprüche, das eine an den Ausgang des Integrieres (40) gekoppelte Unipolarschaltung (41) enthält.

10. Radar nach Anspruch 3, bei dem der Polaritätssignalgenerator (38) einen Spannungsteiler (102-107) enthält, um das Ausgangssignal des zweiten Subtrahierers (31) zu empfangen, eine Vielzahl von Komparatoren (108-111), die jeweils einen an einen jeweiligen Anzapfungspunkt des Spannungsteilers gekoppelten ersten Eingang aufweisen und jeder der Komparatoren einen zweiten Eingang aufweist, um das Ausgangssignal des dritten Subtrahierers (34) zu empfangen, und eine Logikeinrichtung (113-120) zum logischen Verknüpfen der Ausgangssignale der Komparatoren, um ein Logikpegelsignal als Funktion der relativen Phasen der Ausgangssignale der zweiten und dritten Subtraktionsschaltungen (31, 34) zu liefern.

## Revendications

1. Un radar avec atténuation du fouillis comprenant :
une structure d'antenne (14; 64, 65) pour émettre simultanément des ondes radioélectriques polarisées horizontalement et verticalement;
des premier et second détecteurs (24, 25) pour détecter respectivement des signaux FI des composantes polarisées horizontalement et verticalement d'ondes radioélectriques réfléchies; et
des troisième et quatrième détecteurs (26, 27) pour détecter respectivement des signaux FI de la somme vectorielle et de la différence vectorielle des composantes polarisées horizontalement et verticalement;
caractérisé par :
un générateur de signal de polarité (38) destiné à générer un signal de polarité basé sur un signal de sortie de différence entre un signal de sortie de somme des deux signaux de sortie des premier et second détecteurs (24, 25) et un signal de sortie de conversion unipolaire d'un signal de sortie de différence entre les deux signaux de sortie des premier et second détecteurs (24, 25), et sur un signal de sortie de différence entre les deux signaux de sortie des troisième et quatrième détecteurs (26, 27);
un circuit de conversion de polarité (39) pour convertir la polarité du signal de sortie qui est obtenue à partir du générateur de signal de polarité (38), sous la dépendance d'une somme des signaux de sortie des troisième et quatrième détecteurs; et
des moyens intégrateurs (40) pour intégrer le signal de sortie du circuit de conversion de polarité (39), pour fournir ainsi un signal de sortie dans lequel le fouillis de mer a tendance à être minimisé.

2. Un radar selon la revendication 1, comprenant un circuit d'élimination de niveau moyen (43) qui est destiné à éliminer une fraction moyenne de la somme des signaux de sortie des troisième et quatrième détecteurs (26, 27) pour l'application au circuit de conversion de polarité (39).

3. Un radar selon la revendication 1 ou 2, comprenant un additionneur (30) pour produire le premier signal de sortie de somme des deux signaux de sortie des premier et second détecteurs (24, 25);
un premier soustracteur (33) pour produire le signal de sortie de différence entre les deux signaux de sortie des premier et second détecteurs (24, 25);
un circuit unipolaire (32) qui réagit au signal de sortie du premier soustracteur (33) en produisant le signal de sortie unipolaire;
un second soustracteur (31) pour produire un signal de sortie de différence entre le signal de sortie de l'additionneur (30) et celui du circuit unipolaire (32);
un troisième soustracteur (34) pour produire le signal de sortie de différence entre les deux signaux de sortie des troisième et quatrième détecteurs (26, 27);
dans lequel le générateur de signal de polarité (38) réagit aux signaux de sortie des second et troisième soustracteurs (31, 34) en produisant le signal de polarité.

4. Un radar selon la revendication 3, comprenant un additionneur supplémentaire (37) pour former la somme des signaux de sortie des troisième et quatrième détecteurs (26, 27).

5. Un radar selon la revendication 4, comprenant des moyens soustracteurs (35, 36) pour soustraire le signal de sortie du circuit unipolaire (32) des signaux de sortie des troisième et quatrième détecteurs (26, 27), avant la sommation de ces derniers par l'additionneur supplémentaire (37).

6. Un radar selon l'une quelconque des revendications précédentes, dans lequel la structure d'antenne comprend des première et seconde antennes (64, 65) qui sont respectivement destinées aux ondes radioélectriques polarisées horizontalement et verticalement.

7. Un radar selon la revendication 2, dans lequel le circuit d'élimination de niveau moyen (43) comprend une entrée (300), un circuit de retard (301) connecté à l'entrée, un filtre (302) connecté à l'entrée, et un soustracteur pour soustraire le signal de sortie du filtre (302) du signal de sortie du circuit de retard (303).

8. Un radar selon l'une quelconque des revendications précédentes, dans lequel le circuit de conversion de polarité (39) comprend une entrée (200) qui est destinée à recevoir un signal de sortie qui est obtenu à partir du générateur de signal de polarité (38), des moyens inverseurs (201) pour produire un signal inversé, une sortie (203), et des moyens de commutation (202) pour appliquer à la sortie (203) le signal présent sur l'entrée (200) ou le signal inversé provenant des moyens inverseurs (201), sous la dépendance de la valeur de la somme des signaux de sortie des troisième et quatrième détecteurs (26, 27).

9. Un radar selon l'une quelconque des revendications précédentes, comprenant un circuit unipolaire (41) connecté à la sortie de l'intégrateur (40).

10. Un radar selon la revendication 3, dans lequel le générateur de signal de polarité (38) comprend un diviseur de potentiel (102-107) qui est destiné à recevoir le signal de sortie du second soustracteur (31), un ensemble de comparateurs (108-111) ayant chacun une première entrée connectée à une prise respective du divineur de potentiel, et chaque comparateur ayant une seconde entrée qui est destinée à recevoir le signal de sortie du troisième soustracteur (34), et des moyens logiques (113-120) pour combiner de façon logique les signaux de sortie des comparateurs de façon à produire un signal à niveaux logiques qui est fonction des phases relatives des signaux de sortie des second et troisième circuits soustracteurs (31, 34).
